# EUROPEAN PATENT SPECIFICATION

(11) **EP 1 698 036 B1**
(45) Date of publication and mention of the grant of the patent: **20.02.2019**
(21) Application number: 04801437.7
(22) Date of filing: 01.12.2004
(51) Int. Cl.: H02J 9/02, H02J 7/34, H02J 9/00

(54) **MAINTENANCE FREE EMERGENCY LIGHTING**
WARTUNGSFREIE NOTBELEUCHTUNG
ÉCLAIRAGE DE SECOURS NE NÉCESSITANT PAS D'ENTRETIEN

(30) Priority: 17.12.2003 EP 03104750
(43) Date of publication of application: 06.09.2006
(73) Proprietor: Philips Lighting Holding B.V., 5656 AE Eindhoven (NL)
(72) Inventor: BRUEKERS, Bram, J., W., A., NL-5656 AA Eindhoven (NL); CORSTIAANS, Bartholomeus, J., A., NL-5656 AA Eindhoven (NL); VAN DER VEEN, Geert, W., NL-5656 AA Eindhoven (NL); HENDRIKS, Marcus, J., G., M., NL-5656 AA Eindhoven (NL); VERMEULEN, Markus, C., NL-5656 AA Eindhoven (NL)
(74) Representative: Verweij, Petronella Daniëlle
(86) International application number: PCT/IB2004/052629
(87) International publication number: WO 2005/060067

(56) References cited:
- US-A1- 2001 033 501
- US-A1- 2003 172 509
- RICO-SECADES M ET AL: "Evaluation of a low cost permanent emergency lighting system based on high efficiency LEDs" 12 October 2003 (2003-10-12), CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003, CONFERENCE RECORD OF THE IEEE INDUSTRY APPLICATIONS CONFERENCE. IAS ANNUAL MEETING, NEW YORK, NY : IEEE, US, PAGE( , XP010676072 ISBN: 0-7803-7883-0 figure 1

## Description

The invention relates to an emergency lighting device comprising an illumination lamp for illuminating a surrounding area, an energy storage unit for providing electrical energy for powering the lamp, a charging arrangement for charging the energy storage unit, and control mean for activating the lamp and for controlling the charging, the energy storage unit essentially comprises an ultra-capacitor for storing the electrical energy. Further, the invention relates to an emergency lighting system comprising a plurality of such emergency lighting devices.

Emergency lighting devices and systems are known for a long time. Such devices and systems are applied to provide an emergency illumination in building, tunnels, or any other location. Illumination is provided in case of an emergency, e.g. a failure of a power supply which would normally provide power to regular illumination, or any other emergency situation, such as a fire, a smoke alarm, a risk of a presence of explosive substances, or any other emergency. The emergency lighting devices comprise an illumination lamp which can be any suitable type of a lamp, such as a gas discharge lamp, a luminescent tube, a halogen lamp, a standard glow bulb, any other type of filament lamp, a light emitting semi-conductor device, or any other suitable illumination device. To be able to power the lamp, the emergency lighting device comprises a battery, such a NiCd battery, or a lead-acid battery. To be able to fulfill requirements, such as legal requirements or safety requirement imposed by an operator of a facility in which the emergency lighting device is to be installed such as a tunnel, or a building, a minimum duration of operation is required. An example of such minimum duration of operation is one or a few hours, however any time span might be required. As an occurrence of an emergency situation cannot be predicted, the emergency lighting device is required to be fully operational any time, and thus the accumulator needs to be sufficiently charged to be able to provide sufficient energy for illuminating the lamp during the minimum predetermined period.

Rico-Secades M. et al: "Evaluation of a low cost permanent emergency lightning system based on high efficiency LEDs" 12 October 2003, Conference Record of the 2003 IEEE Industry Applications Conference. 38th. IAS Annual Meeting. Salt Lake City, UT Oct. 12 -16, 2003, Conference Record of the IEEE Industry Applications Conference. IAS Annual Meeting New York, NY : IEEE, US, XP010676072 ISBN 0-7803-7883-0 discloses such an emergency lighting system using batteries as an accumulator.

A problem associated with the above emergency lighting is that accumulators have a tendency to deteriorate over time and hence must be tested and possibly replaced periodically. For testing whether the emergency lighting is able to provide the required illumination during at least the minimum required period of time, at present the emergency illumination has to be put into its active, operational state, i.e. the lamp being powered by the battery, and operation of the lamp has to be monitored during at least the minimum predetermined time. When it appears that the lamp continues to operate during at least the predetermined period of time, the condition of the battery is considered to be acceptable, while in the case that the lamp does not operate for the predetermined period of time, the batter requires replacement. A disadvantage of this test procedure is that it mostly requires a taking out of service of the facility, such as the tunnel, building, etc. in which the emergency lighting is installed, and that it is laborious as an operator has to monitor a duration of illumination of each lamp in or on the facility.

The invention intends to provide an illumination lighting, which requires a low amount of maintenance.

To achieve this goal, the emergency lighting device according to the invention is characterized in that the emergency lighting device comprises a test circuit for measuring an impedance of the capacitor in a charged or discharged condition of the ultra-capacitor. The ultra-capacitors, also called super-capacitors or boost capacitors are known as such. An ultra-capacitor stores energy electrostatically by e.g. polarizing an electrolytic solution. This mechanism is highly reversible, allowing the ultra-capacitor to be charged and discharged hundreds of thousands of times. The ultra-capacitor e.g. comprises two non-reactive porous plates suspended within an electrolyte, with a voltage applied across the plates. The applied potential on the positive plate attracts the negative ions in the electrolyte, while the potential on the negative plate attracts the positive ions. This effectively creates two layers of capacitive storage, one where the charges are separated at the positive plate, and another at the negative plate. The ultra-capacitor can comprise a parallel plate or a double layer capacitor. The person skilled in the art however has not considered application of such ultra-capacitor in an emergency lighting, as ultra-capacitors have a high cost price and current volumes of an ultra-capacitor for achieving a certain energy storage capacitance are significantly larger than those of a conventional battery, such as a NiCd or NiMh battery. As however properties of a capacitor do not, at least not significantly deteriorate over time, testing the emergency lighting device by activating its emergency lighting state and monitoring if the device is able to power the lamp during at least the minimum predetermined time is not required, as electrical properties of the ultra-capacitor are substantially constant over time, i.e. do not or not significantly deteriorate. Further, (operational) lifetime of an ultra-capacitor can be predicted relatively accurate. As a voltage of the ultra-capacitor will linearly or approximately linearly depend on a charging condition thereof, an electrical converter might be connected between the ultra-capacitor and the lamp for converting a voltage supplied by the ultra-capacitor into a voltage or other electrical quantity required for operating the lamp.

The emergency lighting device advantageously comprises a test circuit for measuring an impedance of the capacitor in a charged or discharged condition of the ultra-capacitor. By measuring an impedance of the ultra-capacitor, such as a leakage impedance or an alternating current (AC) impedance, which can be performed in any charging condition of the ultra-capacitor, a condition thereof can be reliably tested, as a leakage impedance and/or an alternating current impedance provide a reliable indicator of a condition of the ultra-capacitor. For measuring the alternating current impedance, the test circuit can apply an alternating voltage to the ultra-capacitor and measure an alternating current flowing in response thereto through the ultra-capacitor, or vice-versa. Thus, these tests can be performed without having to discharge the capacitor and/or power the lamp with the energy stored in the ultra-capacitor for a time period, such as the minimum required operational time of the emergency lighting device. As the ultra-capacitors have a long operational life, periodical replacement of batteries can be omitted thus avoiding an environmental burden associated therewith, as well as material and labor costs for replacement, and costs of down time of the emergency lighting device, which are mostly high as maintenance of the emergency lighting device will in a lot of applications require a taking out of operation of the facility in which it is installed. Also, replacement of the batteries would, e.g. in office buildings require an opening of lighting fixtures, ceilings, etc. As such operations are not required with the emergency lighting device according to the invention, operational costs are reduced even further.

Also, energy consumption of the emergency lighting device according to the invention is reduced, as a continuous or periodical recharging of the battery to be able to maintain the battery at its full capacity is not required. Leakage current of the ultra-capacitor is low, and thus power consumption associated with recharging thereof is significantly reduced. Also, the continuously or periodic (trickle) charging of a battery results in additional losses in the battery and increases a temperature of the battery, thus further affecting battery life and thus further increasing maintenance burden on the emergency lighting device. A further advantage of the ultra-capacitor is that it can be charged very fast. Thus, in the emergency lighting, once power is available again after an emergency, the device is fully operational again in a short time, as the ultra-capacitor can be charged with a very high current, thus in a very short time span. As a result, the emergency lighting device is fully operational again within a very short time, should the emergency situation reoccur. Also, a momentary charging condition of the ultra-capacitor can be checked reliably and with simple means, such as a simple electronic test circuit, by sensing a momentary voltage of the ultra-capacitor, as the amount of electrical energy stored in the capacitor is linearly or virtually linearly dependent on the voltage thereon.

In the emergency lighting device, the charging arrangement can advantageously be arranged for applying an essentially fixed voltage or current to the ultra-capacitor. Due to the high current which the ultra-capacitor can withstand, as well as the linear relation between the charging condition and the voltage on the capacitor, such a simple and straight forward charging arrangement can be applied. A current limiter can be included for limiting an excessive charging current.

In another advantageous embodiment, the charging arrangement comprises a switching means for alternatingly connecting a switching node with a supply node and a ground node, a first branch being connected to the charging node, the first branch comprising a series connection of at least a capacitor and an inductive element, the first branch for providing electrical energy to a rectifier which is connectable to the ultra-capacitor for charging the ultra-capacitor. Thus, a configuration is provided which is able to charge the ultra-capacitor in a very short time, as a high charging current can be generated with this charging arrangement. Unlike other arrangements, this arrangement makes use of a parasitic series inductance of the ultra-capacitor, as the parasitic series inductance thereof functions as a filter for smoothing a pulsed current charging the capacitor. The switching means can comprise any suitable switching means, such as field effect transistors. The inductive element can comprise an inductor, however to achieve a galvanic isolation and/or to realize a significant change between an input voltage and an output voltage of the charging arrangement, the inductive element can comprise a transformer, the first branch of the charging arrangement being connected to the ground node via a first port of the transformer, a second port of the transformer being connected to the rectifier.

A further advantage of the charging arrangement is that it is protected against high output currents, due to the function of the parasitic series inductance of the ultra-capacitor, inductance of wiring and inductance of the inductive element, which limit current in the case that the ultra-capacitor is fully discharged, i.e. in the case where the initial voltage over the ultra-capacitor is zero or almost zero.

The charging arrangement can further comprise a charging control device for controlling the charging, the charging control device affecting a frequency of a switching of the switching device for affecting a current in the first branch. Alternatively, an RMS current, average current or any combination thereof can be controlled. Duty cycle of the switching is advantageously kept by the control device at an essentially fixed rate. Thus, a semi-resonant converter is created, a switching of the switching device taking place at zero voltage, by keeping a duty cycle of the switching frequency at an essentially fixed rate. Due to the zero voltage switching, power dissipation in the charging arrangement can be kept low despite high currents involved.

Advantageously, the charging control device is arranged for sensing a voltage of the ultra-capacitor when the charging of the capacitor has been stopped. At the moment when the charging of the ultra-capacitor is stopped, voltage drop over the parasitic series inductance thereof will be zero, and thus the voltage sense will provide a reliable measure on the actual charging and/or the actual voltage of the super-capacitor. The charging can be stopped e.g. periodically for a sensing of the voltage of the ultra-capacitor. Also it is possible that the voltage is sensed during charging, while at the moment when the voltage reaches a certain value, the charging is stopped to sense the voltage with a higher accuracy.

The invention will further be described with reference to the appended drawing in which a non-limiting embodiment of the invention is shown, in which:
Fig. 1 shows a block schematically diagram of an emergency lighting device according to the invention; and
Fig. 2 shows a schematic circuit diagram of an embodiment of the charging arrangement according to the invention.

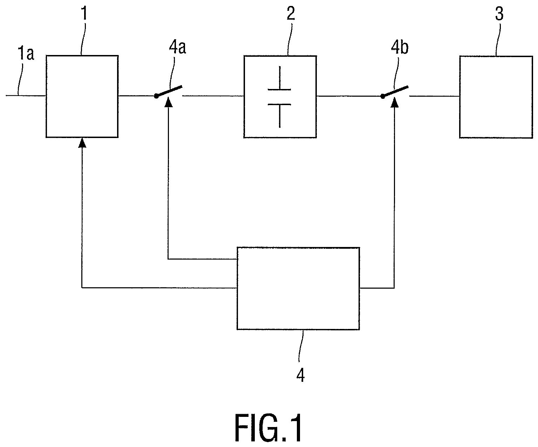

Fig.1 shows an emergency lighting device comprising a charger 1 for charging an energy storing device, in this case an ultra-capacitor 2. The charging device or charging arrangement 1 is able to charge the ultra-capacitor 2 when a connection via the switch 4a has been established. The charging arrangement 1 is supplied with electrical energy by means of an electrical power supply 1a such as an electrical mains. The energy storage device 2 is connectable via a second switch 4b to a lamp 3 for operating the lamp 3. The lamp 3 can comprise any suitable type of lamp, such as a high pressure or low pressure discharge lamp, a halogen lamp, a glow bulb, a luminescent tube, a fluorescent lamp, a semi-conductor light emitting device, or any other suitable illumination device. The emergency lighting system further comprises a control device 4 for controlling the charging of the charger 1 and for switching on the lamp 3 by controlling the switch 4b. In addition to the configuration shown in Fig. 1, it is also possible that the power supply 1a is directly connected via an additional connection (not shown) to the lamp 3, e.g. via an additional switch. In this manner, it is possible to operate the lamp 3 making use of power supplied by the power supply line 1a in non-emergency conditions. Further, it is alternatively possible that the switch 4a is left out, depending on the construction of the charging device 1. The emergency lighting device as depicted in Fig. 1 can be built into one single housing, or might be distributed over a plurality of housings. Also, a converter can be functionally placed between the ultra-capacitor and the lamp, for converting a voltage supplied by the ultra-capacitor, which depends on the charging state of the ultra-capacitor, into a substantially constant A.C. or D.C. voltage for powering the lamp.

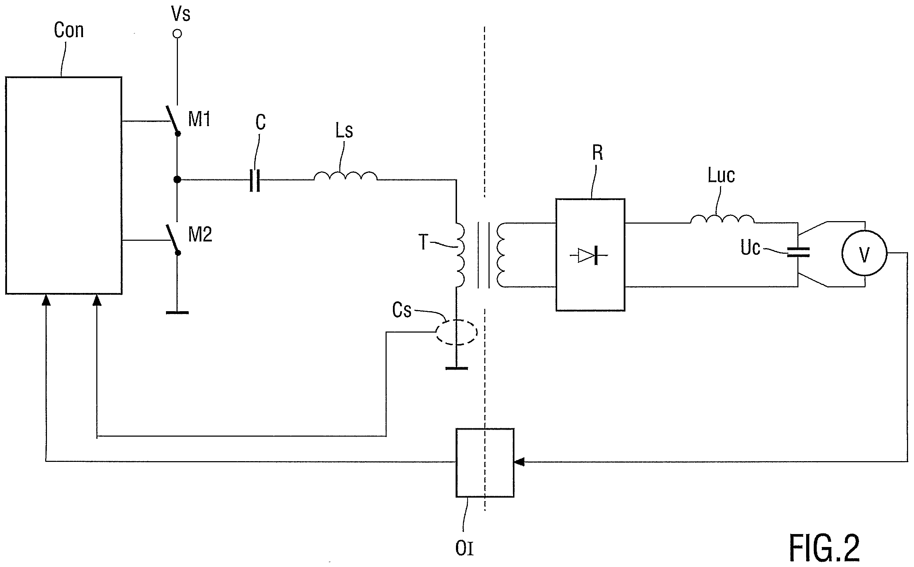

The charging arrangement of the emergency lighting and device according to the invention, as depicted in Fig. 2 comprises a switching means comprising switches M1 and M2. The switching means alternatingly connect a first branch comprising capacitor C and series inductor Ls to a supply voltage Vs and a ground voltage. This supply voltage Vs can e.g. comprise a rectified mains voltage. The series inductor Ls is connected to a first port, i.e. a first winding of a transformer T. A second port, i.e. a second winding of the transformer T is connected to a rectifier for rectification of pulses provided by the rectifier R. The rectifier R is connected to the ultra-capacitor UC for storing the electrical energy. A parasitic series inductance of the ultra-capacitor, possibly in combination with inductance of wiring, schematically indicated as Luc provides for a filtering of the current pulses provided by the rectifier R to the ultra-capacitor UC. The value of the capacitor C is chosen large enough such that zero voltage switching can be guaranteed as the effective load, i.e. the ultra-capacitor including the parasitic inductance Luc, inductance of wiring and inductance of the transformer and/or the series inductor Ls, is inductive over the entire operating frequency range and the switching means comprising the switches M1 and M2 is driven with a 50% duty cycle. The series inductors Ls can be a separate inductance however can also be formed (partly or fully) by a leakage inductance of the transformer T. The rectifier can e.g. be a diode rectifier or a synchronous rectifier. The ultra-capacitor Uc has a large physical dimension and as a consequence thereof the parasitic inductance Luc of the ultra-capacitor and the connections thereof is large. In the circuit according Fig. 2, this parasitic series inductance is used as a filter to smoothen current pulses from the rectifier and plays an important role in the working principle of the circuit according to Fig. 2. Thus, the parasitic series inductance of the transformer as well as the parasitic series inductance of the ultra-capacitor, which components normally play an adverse role in the circuit and are regarded as an undesired behavior of the transformer respectively the ultra-capacitor, are used as an integral part of the circuit according to Fig. 2. This is especially of advantage since these parasitic inductance's are large due to the large dimensions chosen for the transformer and the ultra-capacitor, these dimension being chosen to be able to charge the ultra-capacitor with a high current in a short time. The charging of the ultra-capacitor is controlled by the charging control device (or any other control arrangement) comprising the optical isolator (such as an optocoupler) OI, a current sensing device Cs sensing a current in the primary winding of the transformer T, a voltage sensing arrangement V sensing a voltage of the ultra-capacitor and a controller Con. The charging control device unit regulates a charge current of the ultra-capacitor by controlling a peak value, RMS value or average value of the primary current, thus the current flowing in the primary winding of the transformer T. The value of this current is sensed with the current sense Cs (e.g. comprising a shunt resistor) or alternatively is sensed in (series with) the switch M2 e.g. comprising a metal oxide semiconductor field effect transistor or is sensed in series with the supply voltage Vs. A peak value of the primary current in the primary winding of the transformer T can be controlled by the controller Con by controlling the switching frequency. A 50% duty cycle is not affected thus achieving zero voltage switching over the entire operating range of the converter according to Fig. 2. The D.C. voltage over the ultra-capacitor can be measured continuously by the sensing arrangement V, however due to the influence of the inductance Luc a measurement error will occur when current flows through this inductance. Therefore, according to the invention the voltage over the ultra-capacitor can be accurately measured when the charging is stopped, thus being able to measure a direct current voltage over the ultra-capacitor without having any effects of the output inductance on the voltage measured. Such output voltage measurement can be performed periodically, and thus for this reason the charging should be interrupted periodically if charging takes place. Also, it is possible that a less accurate measurement is performed during the charging, while at a moment when the capacitor approaches a state of fully charged, the charging control device applies the accurate measurement stopping the charging. The charging control device can be a separate device or form part of the control device 4 of Fig. 1.

The ultra-capacitor in the emergency lighting device according to Fig. 1 can be tested by measuring an impedance of the capacitor, which is possible in any charging condition of the ultra-capacitor. It is possible to measure a leakage impedance of the ultra-capacitor, the leakage impedance providing an indication on the condition of the ultra-capacitor. Also, it is possible to measure an alternating current impedance, e.g. by applying and alternating voltage to the ultra-capacitor and measuring an alternating current flowing in response to this voltage through the ultra-capacitor. Also it is alternatively possible to apply a current to the ultra-capacitor and measure a voltage generated in response thereto over the ultra-capacitor. The test circuit has not been depicted in Fig. 1 and Fig. 2. Advantageously, both the leakage impedance or current and energy contents are measured. Leakage can be measured by measuring a voltage decrease over a time. Energy contents is determined by measuring a voltage over the capacitor (preferably when charging has stopped), and calculating energy contents therefrom, e.g. making use of the formula E =½CV² wherein E is the energy contents, C the capacitance and V the voltage over the ultra-capacitor.

An emergency lighting system can comprise a plurality of emergency lighting devices as outlined above, the devices of the system can be interconnected via any suitable means. Further, the system can comprise a control system for checking the devices of the system and for receiving status information and/or error messages therefrom.

Thus, according to the invention an emergency lighting devices has been created which is essentially free of maintenance, as the period putting into operation of the emergency lighting device and discharging the energy storage unit to be able to check if energy stored in the energy storage unit is sufficient to operate the lamp during at least the minimum predetermined time, can be omitted. Therefore, total operating costs will be significantly reduced and a burden of testing the emergency lighting device can be omitted, which is considered to be of advantage as it avoids interruption of normal operations taking place in the facility in which the emergency lighting device is installed.

## Claims

1. An emergency lighting device comprising an illumination lamp (3) for illuminating a surrounding area, an energy storage unit (2) for providing electrical energy for powering the lamp (3), a charging arrangement (1) for charging the energy storage unit (2), and control means (4) for activating the lamp (3) and for controlling the charging, the energy storage unit (2) comprises an ultra-capacitor (UC) for storing the electrical energy,
**characterized in that** the emergency lighting device comprises a test circuit for measuring an impedance of the capacitor in a charged or discharged condition of the ultra-capacitor (UC), wherein the impedance comprises a leakage impedance or an alternating current impedance.

2. The emergency lighting device according to claim 1, wherein when the impedance is the alternating current impedance, the test circuit is arranged for applying an alternating voltage to the ultra-capacitor (UC) and measuring an alternating current flowing in response thereto through the ultra-capacitor (UC), or vice versa.

3. The emergency lighting device according to any of the preceding claims, wherein the charging arrangement (1) is arranged for applying a fixed voltage or current to the ultra-capacitor.

4. The emergency lighting device according to any the preceding claims, wherein the charging arrangement (1) comprises a switching means for alternatingly connecting a switching node with a supply node and a ground node, a first branch being connected to the switching node, the first branch comprising a series connection of at least a capacitor and an inductive element, the first branch for providing electrical energy to a rectifier which is connectable to the ultra-capacitor for charging the ultra-capacitor.

5. The emergency lighting device according to claim 4, wherein the inductive element comprises a transformer, the first branch being connected to the ground node via a first port of the transformer, a second port of the transformer being connected to the rectifier.

6. The emergency lighting device according to claim 4 or 5, the charging arrangement (1) further comprising a charging control device for controlling the charging, the charging control device affecting a frequency of a switching of the switching device for affecting a current in the first branch.

7. The emergency lighting device according to claim 6, wherein the charging control device is arranged for keeping a duty cycle of the frequency of the switching at a fixed rate.

8. The emergency lighting device according to any of claims 4 to 7, wherein the control device (4) is arranged for sensing a voltage of the ultra-capacitor (UC) when the charging of the capacitor has been stopped.

9. An emergency lighting system comprising a plurality of emergency lighting devices according to any of claim 1 to 8.

## Patentansprüche

1. Notbeleuchtungsvorrichtung, umfassend einer Leuchtlampe (3) zur Beleuchtung einer Umgebung, eine Energiespeichereinheit (2) zur Bereitstellung elektrischer Energie zur Energieversorgung der Lampe (3), eine Ladeanordnung (1) zur Ladung der Energiespeichereinheit (2) und eine Steuereinrichtung (4) zum Aktivieren der Lampe (3) und zum Steuern des Ladens, wobei die Energiespeichereinheit (2) einen Ultrakondensator (UC) zum Speichern der elektrischen Energie aufweist,
**dadurch gekennzeichnet, dass** die Notbeleuchtungsvorrichtung eine Testschaltung zum Messen einer Impedanz des Kondensators in einem geladenen oder entladenen Zustand des Ultrakondensators (UC) umfasst, wobei die Impedanz eine Leckimpedanz oder eine Wechselstromimpedanz umfasst.

2. Notbeleuchtungsvorrichtung nach Anspruch 1, wobei, wenn die Impedanz die Wechselstromimpedanz ist, die Testschaltung eingerichtet ist, um eine Wechselspannung an den Ultrakondensator (UC) anzulegen und einen Wechselstrom zu messen, der als Reaktion darauf durch den Ultrakondensator (UC) oder umgekehrt strömt.

3. Notbeleuchtungsvorrichtung nach einem der vorstehenden Ansprüche, wobei die Ladeanordnung (1) zum Anlegen einer festen Spannung oder eines festen Stroms an den Ultrakondensator eingerichtet ist.

4. Notbeleuchtungsvorrichtung nach einem der vorstehenden Ansprüche, wobei die Ladeanordnung (1) eine Schalteinrichtung zum abwechselnden Verbinden eines Schaltknotens mit einem Versorgungsknoten und einem Masseknoten umfasst, wobei eine erste Verzweigung mit dem Schaltknoten verbunden ist, wobei die Verzweigung eine Reihenverbindung von mindestens einem Kondensator und einem induktiven Element umfasst, wobei die erste Verzweigung zum Bereitstellen von elektrischer Energie zu einem Gleichrichter dient, der mit dem Ultrakondensator verbindbar ist, um den Ultrakondensator zu laden.

5. Notbeleuchtungsvorrichtung nach Anspruch 4, wobei das induktive Element einen Transformator umfasst, wobei die erste Verzweigung über einen ersten Anschluss des Transformators mit dem Masseknoten verbunden ist und ein zweiter Anschluss des Transformators mit dem Gleichrichter verbunden ist.

6. Notbeleuchtungsvorrichtung nach Anspruch 4 oder 5, wobei die Ladeanordnung (1) ferner eine Ladesteuervorrichtung zum Steuern des Ladevorgangs umfasst, wobei die Ladesteuervorrichtung eine Frequenz eines Schaltens der Schaltvorrichtung zum Beeinflussen eines Stromes in der ersten Verzweigung beeinflusst.

7. Notbeleuchtungsvorrichtung nach Anspruch 6, wobei die Ladesteuervorrichtung eingerichtet ist, um ein Tastverhältnis der Frequenz des Umschaltens bei einer festen Rate zu halten.

8. Notbeleuchtungsvorrichtung nach einem der Ansprüche 4 bis 7, wobei die Steuervorrichtung (4) zum Messen einer Spannung des Ultrakondensators (UC) eingerichtet ist, wenn das Laden des Kondensators gestoppt wurde.

9. Notbeleuchtungssystem, umfassend eine Vielzahl von Notbeleuchtungsvorrichtungen nach einem der Ansprüche 1 bis 8.

## Revendications

1. Dispositif d'éclairage d'urgence comprenant une lampe d'éclairage (3) pour éclairer une zone environnante, une unité de stockage d'énergie (2) pour fournir de l'énergie électrique pour alimenter la lampe (3), un agencement de charge (1) pour charger l'unité de stockage d'énergie (2), et un moyen de commande (4) pour activer la lampe (3) et pour commander la charge, l'unité de stockage d'énergie (2) comprend un ultra-condensateur (UC) pour stocker l'énergie électrique,
**caractérisé en ce que** le dispositif d'éclairage d'urgence comprend un circuit d'essai pour mesurer une impédance du condensateur dans une condition chargée ou déchargée de l'ultra-condensateur (UC), dans lequel l'impédance comprend une impédance de fuite ou une impédance de courant alternatif

2. Dispositif d'éclairage d'urgence selon la revendication 1, dans lequel, lorsque l'impédance est l'impédance de courant alternatif, le circuit d'essai est agencé pour appliquer une tension alternative sur l'ultra-condensateur (UC) et mesurer un courant alternatif passant, en réponse à celle-ci, à travers l'ultra-condensateur (UC), ou vice versa.

3. Dispositif d'éclairage d'urgence selon l'une quelconque des revendications précédentes, dans lequel l'agencement de charge (1) est agencé pour appliquer une tension ou un courant fixe sur l'ultra-condensateur.

4. Dispositif d'éclairage d'urgence selon l'une quelconque des revendications précédentes, dans lequel l'agencement de charge (1) comprend un moyen de commutation pour connecter en alternance un noeud de commutation à un noeud d'alimentation et un noeud de mise à la terre, une première branche étant connectée au noeud de commutation, la première branche comprenant une connexion en série d'au moins un condensateur et d'un élément inductif, la première branche étant destinée à fournir de l'énergie électrique à un redresseur qui est connectable à l'ultra-condensateur pour charger l'ultra-condensateur.

5. Dispositif d'éclairage d'urgence selon la revendication 4, dans lequel l'élément inductif comprend un transformateur, la première branche étant connectée au noeud de mise à la terre par l'intermédiaire d'un premier port du transformateur, un second port du transformateur étant connecté au redresseur.

6. Dispositif d'éclairage d'urgence selon la revendication 4 ou 5, l'agencement de charge (1) comprenant en outre un dispositif de commande de charge pour commander la charge, le dispositif de commande de charge affectant une fréquence d'une commutation du dispositif de commutation pour affecter un courant dans la première branche.

7. Dispositif d'éclairage d'urgence selon la revendication 6, dans lequel le dispositif de commande de charge est agencé pour maintenir un cycle de service de la fréquence de la commutation à un taux fixe.

8. Dispositif d'éclairage d'urgence selon l'une quelconque des revendications 4 à 7, dans lequel le dispositif de commande (4) est agencé pour détecter une tension de l'ultra-condensateur (UC) lorsque la charge du condensateur a été arrêtée.

9. Système d'éclairage d'urgence, comprenant une pluralité de dispositifs d'éclairage d'urgence selon l'une quelconque des revendications 1 à 8.
